Europäisches Patentamt

European Patent Office

Office européen des brevets

(11) Publication number: **0 516 993 A1**

# EUROPEAN PATENT APPLICATION

(21) Application number: **92107733.5**

(22) Date of filing: **07.05.92**

(51) Int. Cl.⁵: **G06F 3/06**, G06F 13/40

(30) Priority: **05.06.91 US 710777**

(43) Date of publication of application:
**09.12.92 Bulletin 92/50**

(84) Designated Contracting States:
**AT DE ES FR GB**

(71) Applicant: **TANDON CORPORATION**
**301 Science Drive**
**Moorpark, CA 93021(US)**

(72) Inventor: **Bregman, Burton Alan**
**5318 Agnes Ave &NUM;4**
**North Hollywood, CA 91607(US)**
Inventor: **Lopez, Rudolfo**
**1814 Alderwood Place**
**Thousand Oaks, CA 913162(US)**
Inventor: **Huang, Kenneth Yu-Kwai**
**4048 Doneva Road**

**Moorpark, CA 93021(US)**
Inventor: **Jackson, Mark**
**2720 Fairway Park Lane**
**Simi Valley, CA 93063(US)**
Inventor: **Kummer, David A.**
**3052 Calvert Court**
**Camarillo, CA 93012(US)**
Inventor: **Rice, Larry**
**1606 East Mayfair Street**
**Simi Valley, Ca 93065(US)**
Inventor: **Rumer, Robert T.**
**3008 Calvert Court,**
**Camarillo, CA 93010(US)**

(74) Representative: **Strehl, Schübel-Hopf,**
**Groening**
**Maximilianstrasse 54 Postfach 22 14 55**
**W-8000 München 22(DE)**

(54) **Removable media emulator.**

(57) A removable peripheral device system for use in a computer system is disclosed including a device emulator which allows connection or disconnection of peripheral devices without reconfiguring the computer system. The device emulator controls the logical and physical connection and disconnection of the device to a computer bus during system operation. The device emulator responds for the device when it is logically or physically disconnected from the bus. A unique apparatus for logically connecting and disconnecting the device from the bus and device ID selection apparatus is also disclosed.

FIG.1

FIELD OF INVENTION

The invention relates generally to methods and means for adding or removing or disconnecting disk drives and other peripherals from a computer system without reconfiguring the system.

BACKGROUND OF THE INVENTION

The interconnection of disk drives and other peripherals with computer systems is generally well known. Many such systems must be reconfigured when a peripheral is connected with or disconnected from the system.

The applicants' assignee has previously developed a removable disk drive system, sold under the Tandon Data Pac trademark, which does not require such reconsideration. These systems were provided with a relatively high level of control between the disk controller and the receptacle and disk drive using a non-standard interface and also non-standard disk drives. The original product was the subject of several United States Patents Nos. 5,014,237, 4,956,733, 4,884,261, 4,833,554, D310,354.

A currently popular peripheral interface is the Small Computer System Interface ("SCSI"). The original SCSI-1 standard (X3.131-1986 Small Computer System Interface (SCSI)) is currently available from the American National Standards Institute, 1430 Broadway, New York, New York 10018. The latest revision of the SCSI-2 draft proposed American National Standard (Document No. X3.131-198X) is available from Global Engineering Documents, 2805 McGaw Avenue, Irvine, California 92714. An understanding of the SCSI interface including the various bus phases, codes, and signals, is assumed throughout.

Several problems arise when a standard SCSI hard disk drive is to be connected and disconnected from the SCSI bus during normal operations. First a device once present on the SCSI bus must always respond to communications addressed to it. If a standard SCSI drive was simply disconnected from the bus, it would not be capable of responding to the SCSI bus. Second, the removal of the drive must be prevented at inopportune times, eg. when the device is executing a command. Finally, if one drive is removed and another drive inserted in its place, the controller must be alerted that the drive has been changed or else data will be lost.

SUMMARY OF THE INVENTION

A computer system in accordance with one aspect of the invention includes a bus, a device, and a device emulator including a communication controller connected to a bus, and an emulator controller for montioring commands addressed to the device. The emulator is further operative to detect whether the device is logically connected to the bus and operative to respond for the device when it is not logically connected to the bus.

A removable media emulator in accordance with another aspect Of the invention includes a SCSI controller and an emulator controller for receiving commands from a SCSI interface. The removable media emulator is operative to detect when a fixed media device is not logically connected to the SCSI bus and respond for the fixed media device when the device is not logically connected to the SCSI bus so as to emulate a removable media device.

A SCSI device in accordance with another aspect of the invention includes an ID selection circuit for selecting one of a plurality of SCSI device ID's and a connector for electrical connection of the SCSI device to a receptacle. The ID selection circuit is operatively connected to the connector for selection of the one or more SCSI device ID's by a circuit external to the SCSI device.

It is thus an object of the present invention to provide a system to enable orderly disconnection and re-connection of one or more devices from a pre-defined bus or interface during normal system operations. Another object of the invention is to provided a system in which one or more SCSI hard disk drives are made to emulate a SCSI removable media device.

BRIEF DESCRIPTION OF THE DRAWINGS

A better understanding of the invention may be had from a consideration of the following Detailed Description, taken in conjunction with the accompanying drawings in which:

Fig. 1 is a functional block diagram of the RME in a single receptacle environment;

Fig. 2 is a functional block diagram of the controller 10 of Fig. 1 suitable for use in a two receptacle environment;

Fig. 3 is a logic diagram of the Last Message Sent ("LMS") circuit 30 of Fig. 1 for a single receptacle;

Fig. 4 is a functional block diagram of the ID Mask circuit 40 of Fig. 1 suitable for use in a two receptacle environment;

Fig. 5 is a logic diagram representation of a portion of the ID Mask PAL 401 direction circuit of Fig. 4 for a single receptacle;

Fig. 6A is a representation of some of the signals of Fig. 5 during a bus phase in which disk drive 60 of Fig. 1 is the Initiator Selecting another device which is the Target;

Fig. 6B is a representation of some of the signals of Fig. 5 during a bus phase in which disk drive 60 of Fig. 1 is the Target being Selected by another device which is the Initiator;

Fig. 6C is a representation of some of the signals of Fig. 5 during a bus phase in which disk drive 60 of Fig. 1 is the Target Reselecting to the Initiator;

Fig. 6D is a representation of some of the signals of Fig. 5 during a bus phase in which disk drive 60 of Fig. 1 is the Initiator being Reselected by the Target; and

Fig. 7 is a functional block diagram of an alternate embodiment of the present invention in a two receptacle system.

DETAILED DESCRIPTION

The removable media emulator ("RME") as its name implies allows a SCSI fixed disk drive to emulate a removable media drive thus allowing the entire SCSI disk drive to be removed from the bus while making it appear as if only the media were removed from a floppy or other removable media drive. The RME does this by answering for the drive when it is logically or physically (includes logically) disconnected from the bus; by preventing logical or physical disconnection of the drive until all pending commands or operations have been completed; by informing the SCSI controller that the media was changed when one drive is switched with a second drive; and by temporarily keeping the bus busy during insertion or removal of a drive to prevent glitches or spikes from causing communication errors on the bus.

The RME circuitry can be located on the computer system motherboard or it can be located in the drive receptacle 50, such as in an add on system.

Device ID'S

The SCSI interface requires that all devices connected to the bus have an unique address or identification ("ID"). A standard SCSI fixed disk drive typically will have a mechanism such as a jumper block for manually selecting an ID for the drive. In the removable drive application, each drive cannot have a fixed unique SCSI ID because the system must allow any drive to be used in any receptacle without concern for whether another drive with the same ID is in another receptacle. Alternatively, the user may have many different drives in which case there are an insufficient number of unique ID's to assign to the drives. Thus, each receptacle 50 is assigned a unique SCSI ID, nos. 4 and 5, in the preferred embodiment. In an alternate embodiment in which the removable drive system is added on to an already existing computer, the receptacles can have ID nos. 0, 1, 4, or 5.

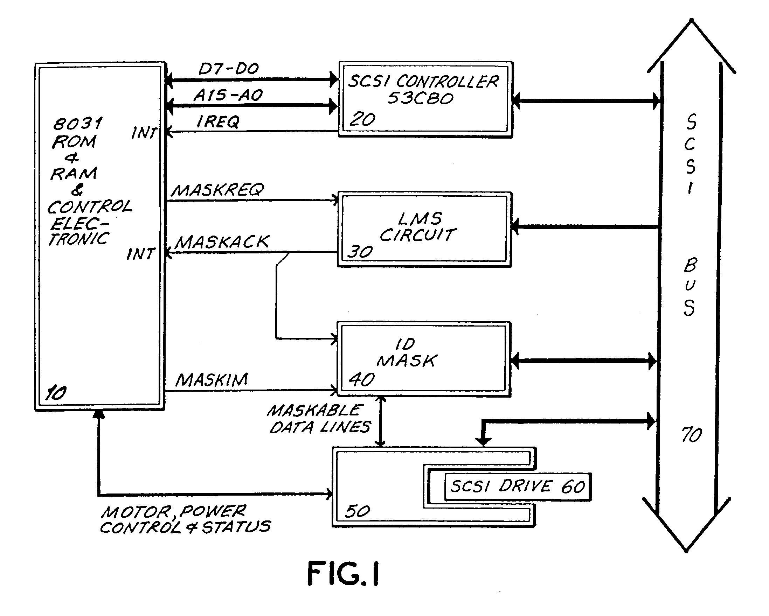

Each drive 60 (Fig. 1) for use in the present system is a standard SCSI fixed disk drive configured having the ID selection jumper block wired to the SCSI connector which mates with the receptacle. Some of the ground connections on the drive SCSI connector are replaced with the lines from the ID jumper selection block. An ID selection block connected to the selection lines from the drive is then provided in the receptacle or the RME. Alternatively, the selection lines can be hardwired in the receptacle connector which mates with the drive.

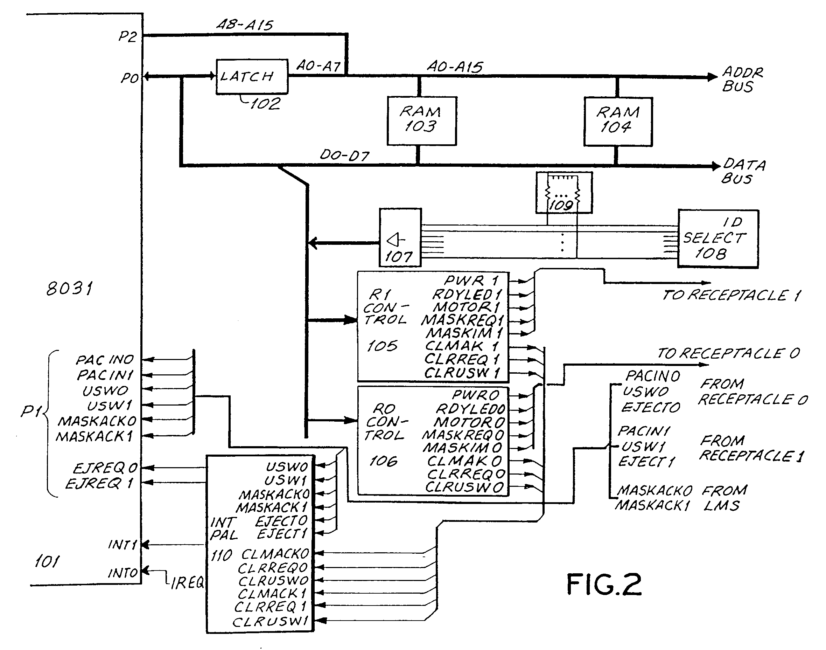

The RME can be assigned any ID number using the ID jumper selection block 108 shown in Fig. 2. In the add on systems, the jumper selection block 108 is also used to designate the ID of the receptacle.

When more than one RME is present on a SCSI bus, all RME's can share the same ID. In this case, the RME's are distinguish by the ID of the units they support, also referred to as the logical unit number. Each RME will be selected during the "Selection" bus phase and each RME will receive the logical unit number in the "Message Out" or "Command" phase. There is no bus contention because all of the RME's are receiving.

At the end of the Message Out or Command phase, each RME will enter a Reserved phase and assert the I/O* signal preventing the Initiator from driving the SCSI data bus. Each RME then puts the ID or ID's of the receptacle(s) it supports onto the bus. The RME whose logical unit was selected however will assert ID no. 7, the highest priority, instead of the ID assigned to the selected receptacle. Each RME will then check to determine whether a higher priority ID is asserted and will release all signals if there is. The remaining RME (with the highest priority) will de-assert the I/O* signal and continue the bus cycle either reporting an invalid code if the logical unit number does not match or completing the command.

In systems with many SCSI devices, the RME ID may be disabled thereby inhibiting direct communication with the RME. Some functions will be unavailable when the RME is so disabled, however the commands can be used if the RME is first put into emulation mode.

Controller

In Fig. 1, the microcontroller together with external RAM, ROM, interrupt, interface, and various support circuitry are shown functionally as a single controller 10. It will be appreciated that any suitable microcontroller or microprocessor together with standard interface circuitry can be used to control the RME and receptacle operations.

The controller 10 suitable for controlling two receptacles is shown in greater detail in Fig. 2. Referring to Fig. 2, an Intel 8031 microcontroller 101 is connected to standard RAM 103 and ROM 104 devices. The latch 102 separates the multiplexed address information from the data signals. The various bus control signals are not shown but it will be appreciated that standard bus interface techniques are employed. In an alternate embodiment there may be one RME and hence one controller per receptacle.

A single receptacle 50 and drive 60 combination is shown in Fig. 1, however, a two receptacle system is described. In the following description, all receptacles and drives are referenced using reference designations 50 and 60, respectively from Fig. 1. Where necessary, the receptacles are distinguished by their SCSI ID or the 0 or 1 receptacle number. For example, the signals for a two receptacle system are shown in Fig. 2. Signals ending with 0 refer to one receptacle (0) and those ending with 1 refer to a second receptacle (1). The numbers 0 and 1 are used to distinguish between the two receptacles in a two receptacle system and do not correspond to SCSI ID's. In the preferred embodiment described below, receptacles 0 and 1 are assigned SCSI ID nos. 4 and 5, respectively. Signal references below which omit the 0 or 1 suffix generically refer to the signal without differentiation between the two receptacles. The drives are distinguished by the receptacle they are currently mated with.

The PACIN and USW signals from the receptacles 50, the MASKACK signals from the last message sent ("LMS") circuit 30 shown in Fig. 1, and the EJREQ signals from the interrupt controller (Intgerrupt PAL) 110 are input to the microcontroller 101 via internal input port P1. PACIN indicates that the drive is electrically mated with the SCSI connector in the receptacle. USW indicates the mechanical position of the drive loading mechanism. USW is inactive when no drive is in the receptacle. USW becomes active when a drive is inserted by the user, returns to inactive as the drive is loaded by the motor, and becomes active again when the drive is mechanically load. An interrupt is generated when the eject button is depressed by the user. The interrupt controller 110 supplies the EJREQ signals to microcontroller 101. The microcontroller 101 reads the RME ID (and receptacle ID in the add on system) using buffer 107 which is connected to pull-up resistors 109 and jumper block 108. The RME ID (and receptacle ID in the add on system) can be changed by selecting the appropriate jumpers.

The microcontroller 101 has two interrupt inputs, INT0 and INT1. INT0 is connected to the SCSI controller interrupt request line ("IREQ"). When a SCSI communication which the RME must respond to is detected, the SCSI controller 20 issues IREQ.

INT1 is used as a common interrupt input and is connected to the interrupt PAL 110. After receiving an INT1 interrupt, the microcontroller 101 interrogates input port P1 to determine which one of the six possible signals (USW0, USW1, ESREQ0, ESREQ1, MASKACK0 or MASKACK1) caused the interrupt.

An eight bit latch labeled R0 Control 106 provides an output port for control of the first receptacle. A second latch, R1 Control 105 provides an output port for a second receptacle if present in the system. These latches provide the PWR, MTR, and RDYLED signals to the receptacles 50; the MASK and MASKIM signals to the ID MASK circuit 30 in Fig. 1; and the CLMACK, CLRREQ, and CLRUSW signals to the interrupt controller 110.

The +5 Volt and +12 Volt power supplies to each drive are turned on and off by PWR signal controlled relays. Similarly, the receptacle motor in each receptacle which loads and unloads the drive is controlled through a relay operated by the respective MTR signal. Each Ready LED is operated by the respective RDYLED signal.

Interrupt Controller

An interrupt controller 110 in Fig. 2 generates the INT1 interrupt signal for the microcontroller 101. The interrupt controller can be implemented using a single programmable array logic ("PAL") device. The interrupt controller 110 will generate an interrupt in response to the MASKAK0 or MASKAK1 signals from the LMS circuit 30 (Fig. 1) which indicate that their respective drives 60 have been masked from the SCSI bus. The microcontroller 101 can determine which MASKACK signal caused the interrupt by reading input port P1. The microcontroller can disable or clear the MASKACK interrupt using the CLMACK0 and CLMACK1 signals from the R0 and R1 control ports 106 and 105.

An interrupt is also generated in response to the EJECT0 and EJECT1 signals from the respective receptacle eject button. The microcontroller can disable or clear the EJECT interrupts using the CLRREQ0 and CLRREQ1 signals from the R0 and R1 control ports 106 and 105. The interrupt controller also provides the EJREQ0 and EJREQ1 signals to the microcontroller on port P1 so that the microcontroller can determine which receptacle eject button was depressed.

Similarly, the USW0 and USW1 signals from the receptacles 50 will generate an interrupt to the microcontroller. The microcontroller 101 can disable or clear the USW interrupts using the CLRUSW0 and CLRUSW1 signals from the R0 and R1 control ports 106 and 105.

## LMS Circuit

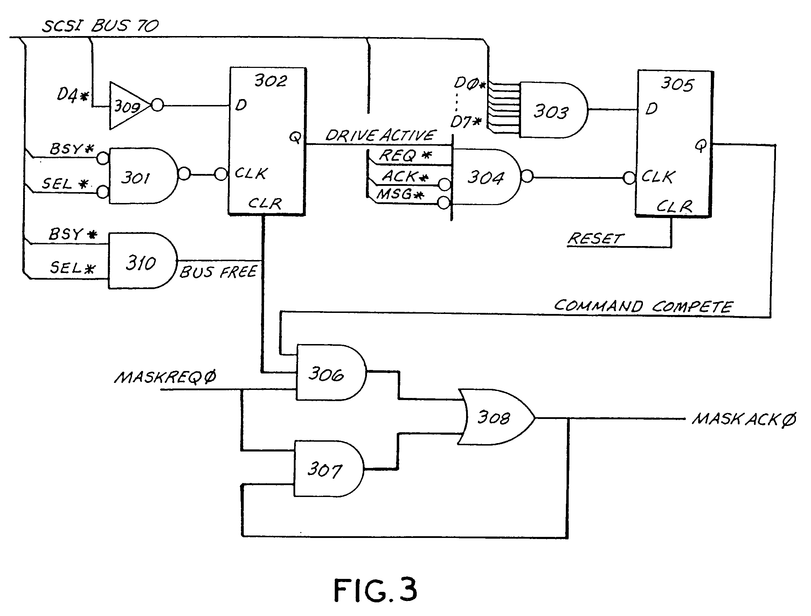

The LMS circuit 30 (Fig. 1) monitors all communications from the drive for the SCSI "Command Complete" code. One LMS circuit is required for each receptacle, however, two LMS circuits can be implemented using a single PAL device. The LMS circuit for a single receptacle (receptacle 0) is shown schematically in Fig. 3.

The LMS circuit has three basic functions. Latch 302, gates 301 and 310 and inverter 309 indicate via the output of gate 302 when the drive is active. Gates 303 and 304 and latch 305 indicate when the drive has sent the Command Complete code thus indicating that it is idle. Gates 306, 307, and 308 return a mask acknowledge signal ("MASKACK") to the ID Mask circuit 40, the microcontroller 101, and the interrupt PAL 110 when the drive 50 is idle and a mask request ("MASKREQ") was issued.

Referring to Fig. 3, latch 302 provides the drive active signal to latch 305 whenever an active SCSI "select" phase includes the receptacle ID (ID no. 4 in this example). The D4* (the asterisk suffix indicates an active low signal) input to inverter 309 is from the SCSI D4* data line which corresponds to the receptacle ID. During a select phase the BSY* and SEL* signals shown in Fig. 3 will both be low (active) driving the output of NAND gate 301 low which latches the inverted D4* line into the output of latch 302. When the receptacle is selected the drive active output of latch 302 will be high. During the SCSI "Bus Free" state indicated by BSY* and SEL* being high (inactive), the drive active output of latch 302 will be cleared.

AND gate 303 provides a high output to latch 305 when all of the SCSI data lines are high which corresponds to 00H on the SCSI data bus. That is when the Command Complete code is present. During the "Message In" phase of a bus cycle, the MSG* and ACK* lines will be low (active) and the REQ* line will be high (inactive) driving the output of gate 304 low which turn latches the output of gate 303 into the output of latch 305. Thus latch 305 samples gate 303 during the Message In phases whenever the drive active signal is high. If the Command Complete code is present when this happens, the Command Complete output from latch 305 will be set indicating that the drive to be masked is now idle. Latch 305 is cleared by the system reset signal.

The MASKACK signal is generated by OR gate 308 when AND gate 306 indicates that a MASKREQ is present, the SCSI bus is in a Bus Free state, and the drive is now idle (Command Complete signal is high). AND gate 307 ensures that once asserted, the MASKACK signal will continue to be asserted as long as the MASKREQ signal is active.

## ID Mask Circuit

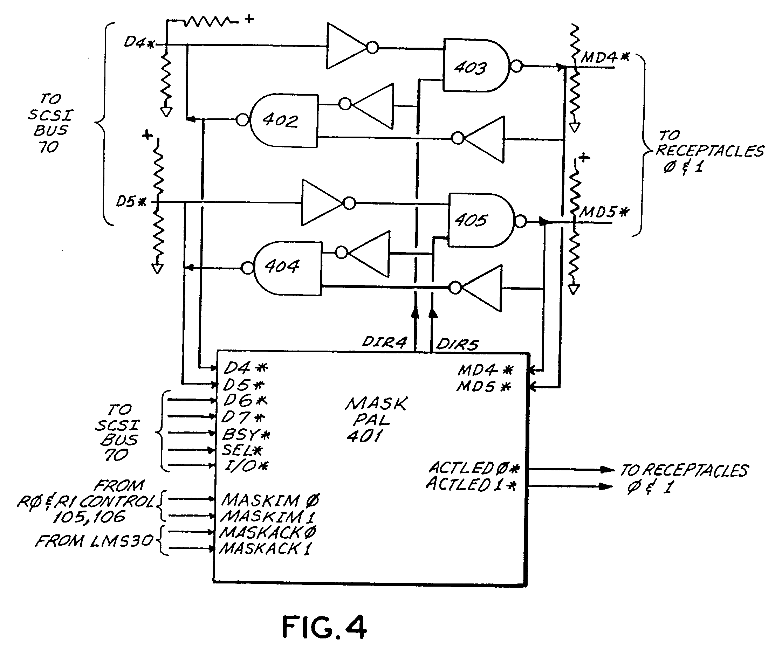

The ID Mask circuit 40 shown in greater detail in Fig. 4 logically connects and disconnects each drive 60 from the SCSI bus 70. SCSI devices are addressed during the "Selection" phase of the bus cycle. A specific device responds to the Selection phase when it detects that its ID bit corresponding to one of the eight SCSI data lines is activated.

The ID Mask circuit is thus essentially a switch that breaks the data line corresponding to the receptacle ID between the SCSI bus 70 and the drive 60. The ID Mask circuit 40 must interrupt signals going to the drive on the masked data line to prevent the drive from being selected. (Currently, the drive will not initiate a bus cycle except in response to another command. Therefore, the data line does not have to be blocked in both directions. In systems requiring disconnection of devices having such a capability, an addition function may be required such as assertion of a BSY* signal local to the disconnected device.) Conversely, it must allow signals to propagate in both directions on the line when it is not masked. The ID Mask circuit therefore must always know in which direction the signal is propagating, to or from the drive 60.

Referring to Fig. 4, the operation of the ID Mask circuit will be described in greater detail. Line drivers 402, 403, 404, and 405 have open collector type outputs. Drivers 402 and 403 drive the SCSI D4* (data line 4 of SCSI bus 70) and MD4* (masked data line 4 to drive 60 in receptacle 0) lines, respectively. Similarly, drivers 404 and 405 drive the D5* (data line 5 of SCSI bus 70) and MD5* (masked data line 5 to drive 60 in receptacle 1) lines, respectively. The two mask circuits operate in the same fashion, therefore only the D4 line mask circuit will be discussed.

The DIR4 line determines whether driver 402 or 403 will be driving line D4* or MD4*, respectively. When DIR4 is high, driver 403 drives MD4* and driver 402 is disabled. When DIR4 is low, driver 402 drives D4* and driver 403 is disabled. In this way DIR4 controls the direction of data flow on the D4 data line between the drive 60 (MD4*) and the bus 70 (D4*).

## Direction Circuit

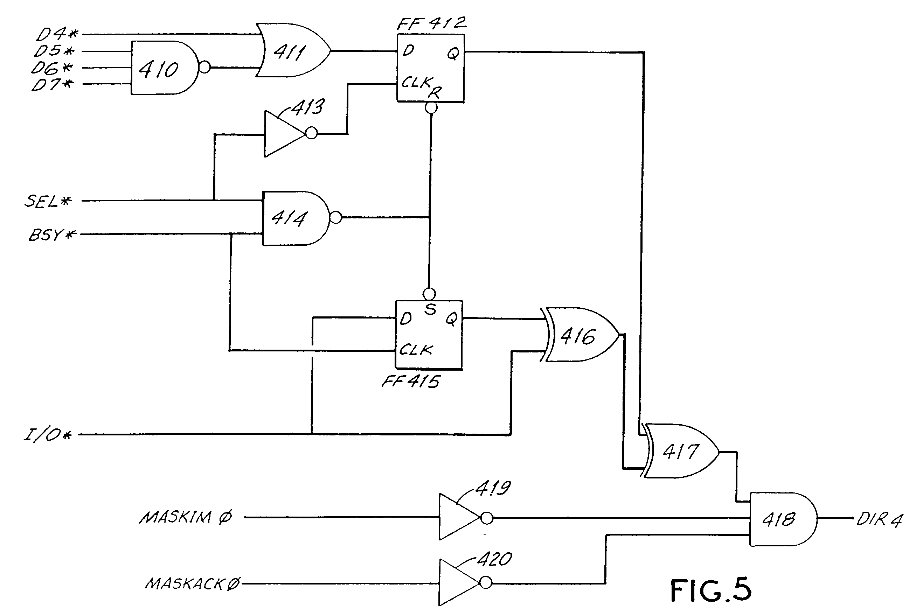

DIR4 signal generation will be described with reference to Fig. 5 which is a logic equivalent of the DIR4 direction circuit portion of the ID Mask PAL 401. The direction circuit monitors the BSY*, SEL*, and I/O* signals for detection of the bus phases.

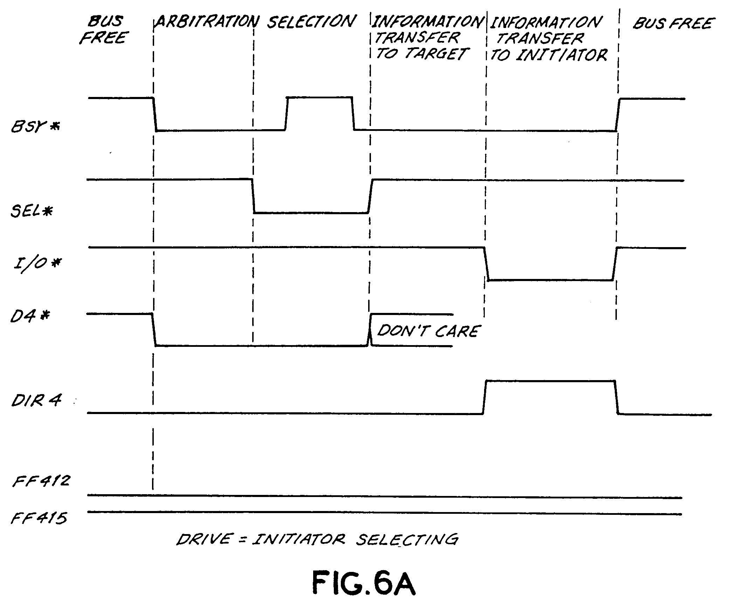

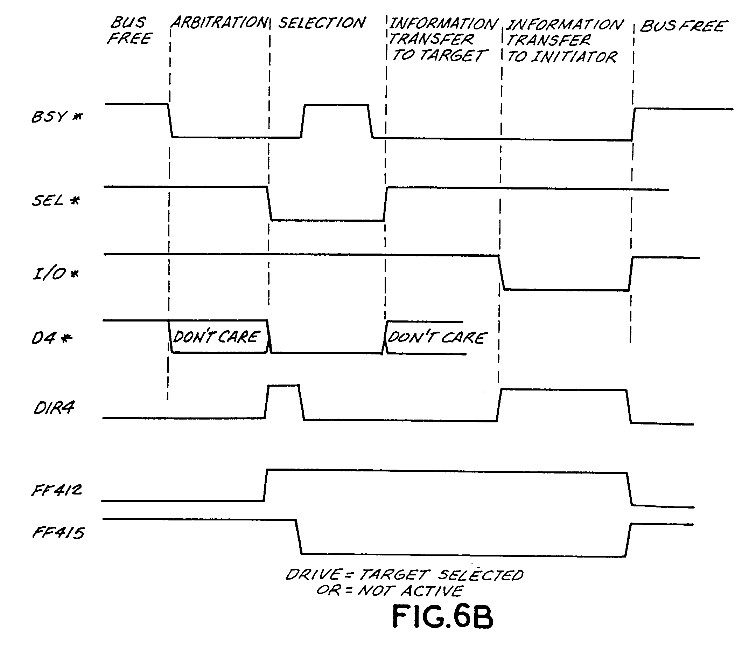

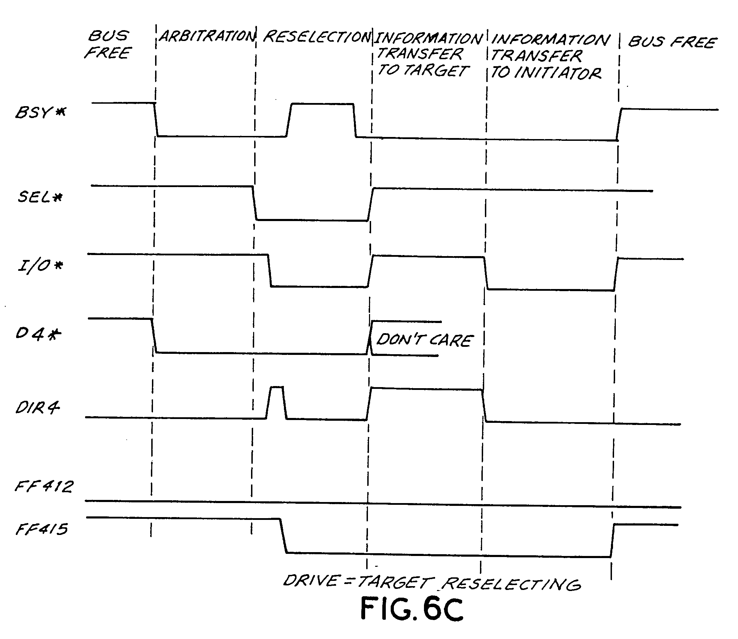

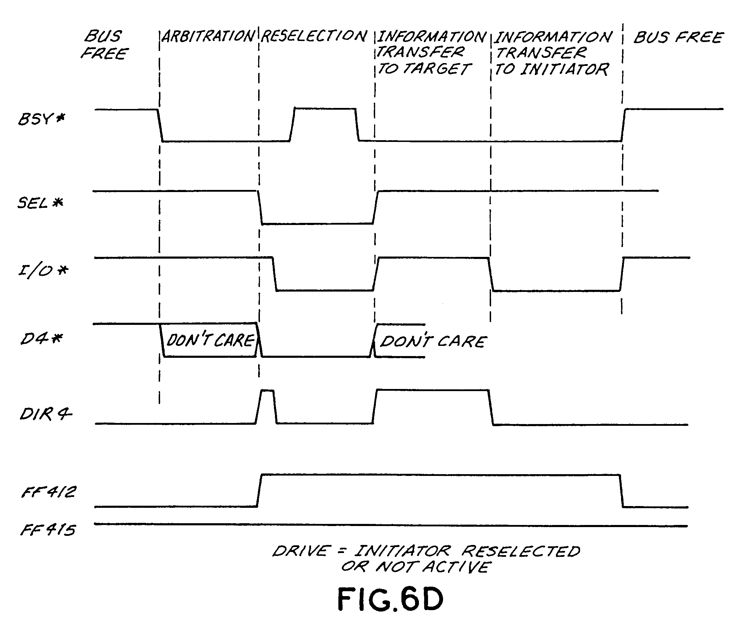

During the Bus Free and "Arbitration" phases, the drive 60 must be allowed to initiate (select) or continue (reselect) a command which requires driving its ID line onto the bus. The direction is therefore set from the drive 60 to the bus 70 during these two bus phases. BSY*, SEL*, and I/O* are high (not asserted) during the Bus Free phase. The output of gate 414 goes low (SEL* and BSY* are high) clearing flip flop 412 and setting flip flop 415 during Bus Free. Similarly, the output of Exclusive OR ("XOR") gate 416 will be low (I/O* and Flip Flop 415 are high) during Bus Free. DIR4 will then be low during Bus Free allowing driver 404 to drive the D4* line. Drive 60 is therefore able to assert its ID during Bus Free. The DIR4 line will not change state until after Arbitration. See Figs. 6A, 6B, 6C, and 6D.

If the drive 60 gained control during Arbitration, it must continue to drive its ID data line during the following Selection phase. Conversely, the drive must release and sense its ID line during Selection if it did not win Arbitration (or did not try) in the event that the device that won Arbitration is trying to select the drive 60. The direction during the Selection phase is set from the drive 60 to the bus 70 (DIR4 is low) if the drive wins Arbitration (Figs. 6A and 6C) and vice versa (DIR4 is high) if the drive either loses or did not assert its ID during Arbitration (Figs. 6B and 6D).

Each SCSI device trying to gain control of the bus will assert its ID line during the Arbitration phase. Gates 410 and 411, flip flop 412, and inverter 413 detect when drive 60 wins Arbitration. The BSY* signal is low (asserted) and the I/O* signal is high (not asserted) during the Arbitration phase. At the end of the Arbitration, the winning device asserts the SEL* line (drives it low). The high to low transition of SEL* clocks flip flop 412 sampling the output of OR gate 411 which is low when the drive wins Arbitration (D4* is low and D5*, D6*, and D7* are high). The output of flip flop 412 will go high when the drive loses or will stay low if the drive wins Arbitration and will not change state until the next Bus Free phase when it is again cleared. If the drive wins arbitration, DIR4 will stay low because flip flop 412 will not change state. Conversely, if the drive loses, flip flop 412 will go high thereby driving DIR4 high and thus allowing the drive 60 to monitor its ID. DIR4 does not matter during the interval from SEL* going low to SEL* going high.

During an information transfer ("Command", "Data", "Status", or "Message") phase, the direction in which data flows relative to the "Initiator" is defined by the I/O* signal on the SCSI bus. The ID Mask circuit must therefore determine whether the drive is an Initiator or a "Target" when it is active on the bus. If the drive is not active the direction does not matter since the drive will not assert any signals.

If the drive 60 won Arbitration and performs a Selection phase, it is acting as an Initiator. If the drive won Arbitration and performs "Reselection", it is a Target. If the drive lost Arbitration and is selected during a Selection phase, it is the Target. If the drive lost Arbitration and is selected during a Reselection phase, it is the Initiator. If the drive lost Arbitration and is not selected the direction of the buffer will not matter because the drive remains inactive.

The I/O* signal defines whether the device that won Arbitration is starting a Selection phase or a Reselection phase. During the Selection and Reselection phases the SEL* signal is low (asserted) and the BSY* signal goes high and then low again. The I/O* signal will be high (not asserted) during a Selection phase and low (asserted) during a Reselection phase. Flip flop 415 is set during the Bus Free phase. The low to high transition of BSY* clocks flip flop 415 which samples the I/O* line during the Selection and Reselection phases. Thus, flip flop 415 will stay set (output high) for a Selection and be cleared (output low) for a Reselection. Flip flop 415 will not change state until it is again set by the Bus Free phase.

During an information transfer phase the I/O* signal will be low (asserted) for information transfers from the Target to the Initiator and high (not asserted) for information transfers in the opposite direction. The DIR4 signal therefore must follow the I/O* line when the drive is a Target and must be inverted when the drive is an Initiator.

To summarize, if the drive 60 won Arbitration and performed a Selection such as depicted in Fig. 6A (drive 60 is an Initiator), the outputs of flip flop 412 and 415 will be low and high, respectively. XOR gates 416 and 417 will therefore supply an inverted I/O* signal on the DIR4 line. If the drive won Arbitration and performed a Reselection such as depicted in Fig. 6C (drive is a Target), the output of flip flops 412 and 415 will be low and XOR gates 416 and 417 supply a non-inverted I/O* signal on the DIR4 line.

If the drive lost arbitration and a Selection phase follows such as depicted in Fig. 6B (drive is a Target), the output of flip flops 412 and 415 will be high causing XOR gates 416 and 417 to provide an inverted I/O* signal on the DIR4 line. If the drive lost Arbitration and a Reselection phase follows such as depicted in Fig. 6D (drive 60 is an Initiator), the output of flip flops 412 and 415 will be high and low, respectively, causing XOR gates 416 and 417 to provide an inverted I/O* signal on DIR4.

Each drive 60 may be masked by either of its respective mask immediate signal ("MASKIM") originating from the R0 and R1 control ports 106 and 105 or mask acknowledge signal ("MASKACK") originating from the LMS circuit 30. Using the D4 data line as an example and referring to Fig. 5, AND gate 418 forces DIR4 low in response to either mask signal (MASKIM0 and MASKACK0). If masked the drive will not sense the selection signal on its ID line and therefore will not respond. The drive will therefore remain inactive.

Referring to Fig. 4, the Mask PAL 401 generates the ACTLED (ACTLED0 and ACTLED1) control signals because it monitors the SCSI bus phases. The ACTLED signals illuminate the drive active LED's in the respective receptacle whenever the respective drive is active on the SCSI bus, ie., has been selected or has selected. Whenever the drive ID is selected or reselected and the drive is not masked, the Mask PAL 401 asserts (low) the ACTLED* signal corresponding to that ID by latching the state of the MD4* or MD5* on the low to high transition of SEL*.

SCSI Controller

A 53C80 SCSI controller chip 20 provides a SCSI interface for the RME to communicate with other devices on the bus 70. The reader is referred to the product literature for details about this device which is available from Logic Devices Incorporated, 628 East Evelyn Avenue, Sunnyvale, California 94086. SCSI controller 20 can be programmed through its registers to monitor several device ID's on the bus 70. Whenever a communication directed to one of the monitored ID's crosses the bus, the SCSI controller 20 generates an interrupt request ("IREQ") to the controller 10 on the INT0 input. Receptacle ID's are monitored in this way.

When the RME needs to answer for a receptacle ID, the controller 10 programs the SCSI controller to monitor that ID. When the ID will no longer be monitored, the controller 10 simply clears the respective ID bit. Of course, the SCSI controller 20 is programmed to constantly monitor the RME ID in systems where the RME is assigned a unique ID.

RME Functional Overview

Referring to Fig. 1, the main components are represented by blocks. The controller 10 oversees all RME and receptacle operations. The RME communicates with other devices over the SCSI bus 70 through the SCSI Controller 20. In Fig. 1, the SCSI drive 60 is shown inserted into a receptacle 50. The LMS circuit 30 monitors the SCSI bus 70 for the last message sent by the disk drive 60 over the bus and thus indicates when the disk drive 60 is idle, ie when it has completely processed all commands. An LMS circuit 30 is provided for each receptacle 50 in the system. An ID Mask circuit 40 connected to the bus 70 and the receptacle 50 provides a mechanism to logically connect and disconnect each drive 60 from the bus.

The RME operates in either of two modes, emulation or passive, in response to a receptacle ID. When the drive is in the receptacle, ready, and logically connected to the SCSI bus, the RME is in a passive mode--it does not respond to the commands directed to that receptacle's ID. Whenever the drive is masked, the RME operates in the emulation mode--it responds to all commands directed to that receptacle's ID.

The RME will enter the emulation mode in response to any of the following events: an eject request from software or from the user operated button, system reset (such as on power up), and SCSI bus reset. The last two events cause an immediate and unconditional entry into the emulation mode. The RME issues MASKIM (MASKIM0 and MASKIM1) signals which immediately mask the drive from the bus. The RME may indicate to the host after a reset that each drive is a removable media device because the drive will not do so itself.

When the system software requests ejection of the drive from the receptacle or the eject pushbutton is depressed the RME will wait for the drive to finish processing any pending commands and wait for the Bus Free state. It will then set the SCSI controller to generate an interrupt request ("IREQ") in the event of any further attempts to select the drive on the bus and mask the drive from the bus. Once the drive is masked, the RME enters the emulation mode, the controller disables power to the drive and commands the receptacle motor to eject the drive from the receptacle (except when the drive is locked).

The RME waits for a Bus Free state and then asserts the BSY* signal to gain control of the SCSI bus before removing power from or supplying power to the drive or ejecting or loading the drive from the receptacle in order to prevent communication errors on the bus. Once the RME has control of the bus, it proceeds to remove or supply power or load or unload the drive from the receptacle. Once the receptacle is masked, the RME is in emulation mode.

An optional enhancement to the RME allows for the RME to interrogate the drive using various SCSI commands such as MODE SENSE, RESERVE, RELEASE, etc. prior to drive ejection. The RME would then store the data and reinitialize the drive after it is again loaded into the receptacle.

Referring to Fig. 1, the transition into the emulation mode will be described in detail. In response to an eject request, the controller 10 issues a mask request ("MASKREQ") to the LMS circuit 30. The LMS circuit returns a mask acknowledge ("MASKACK") to the controller 10 if the drive is idle. The MASKACK signal is also sent to the ID mask circuit 40 which then masks, ie., logically removes, the drive from the bus 70.

As described above, the controller 10 programs the SCSI controller 20 to generate an interrupt when the ID of the masked receptacle is selected on the bus. After the drive is masked, the RME being in the emulation mode responds to all communications directed to the receptacles' ID as if it were a direct access device ("DAD") having a removable medium. In contrast the drive responds as a DAD but with a non-removable medium when it is logically on the bus. The specific commands and response are discussed below.

When the RME is addressed directly (using the RME ID) it responds as a SCSI medium changer device ("MCD"). The MCD mode refers to all communications directed to the RME ID and should be distinguished from the emulation and passive modes in which the receptacle ID is used. The MCD mode is unavailable when the RME ID is not assigned or is disabled.

SCSI Commands and Responses

The RME operates according to standard SCSI protocol. It will respond to every command returning data when appropriate through the "Data In" phase and accepting data when appropriate through the "Data Out" phase. A "Status In" phase is performed after every command or after the data in or data out phases of commands requiring such. Completion of a command is accomplished through the Message In phase during which the RME returns a Command Complete message which is 00H.

The specific commands supported in the preferred embodiment by the RME in emulation mode and also in the MCD mode are described below.

Test Unit Ready

In the emulation mode the RME returns a "Check Condition" code indicating "Device Not Ready" in response to test unit ready. The host will then perform a "Request Sense" command. Following the Request Sense command the RME will return a "Device Not Ready" code when the drive is in the receptacle but not ready and a "Medium Not Present" code when the drive is not in the receptacle. The RME will return a "Good" status code in the MCD mode when the receptacle corresponding to the logical unit number is operational and a drive has been loaded into it.

Request Sense

This command is used by the host to investigate a Check Condition code sent by the RME. The RME responds to the Request Sense command by supplying the code for the condition that caused it to send a Check Condition to the host. See the individual commands for the specific RME responses.

Inquiry

This command is used by the host to determine the type of device that it is interrogating. In emulation mode, the RME returns a DAD code with the removable medium bit set indicating that the receptacle is a removable media device. In MCD mode, the RME will return the MCD code.

Mode Select

This command is not ordinarily sent to the RME at the receptacle ID. However, the RME will respond to the command in emulation mode as well as in MCD mode. This command enables and disables the auto load feature which is enabled by default.

When auto load is enabled, a drive inserted into the receptacle will be loaded into the receptacle automatically. If disabled, the receptacle will not respond to an inserted drive until a Load command is sent by the host. (see Start/ Stop Unit command below)

Mode Sense

This command is not ordinarily sent to the RME at the receptacle ID. However, the RME will respond to the command in emulation mode as well as in MCD mode. The Mode Sense command allows the host to sense whether the auto load feature has been enabled or disabled.

Start/Stop Unit

When received by the RME in emulation mode or in MCD mode, the RME will supply power to the drive or remove power from the drive. If the load bit is set by the host, the RME will eject or load the drive from the receptacle. Setting the load bit changes the command to a Load/Unload. The Load/Unload command is used when the auto load feature is disabled. If a drive logically connected to the bus receives this command it will either start spinning the disks or stop spinning the disks. The drive will reject the command if the load bit is set.

Receive Diagnostic Results

This command is sent by the host after it issues a Send Diagnostic command to receive the results of the diagnostic test. The RME does not currently support this SCSI feature and therefore will return a Good status.

Send Diagnostic

This command tells the RME to perform diagnostic tests. The RME does not currently support this feature. Thus any Send Diagnostic command that is issued with parameters is an illegal request. The RME will therefore always return a Good status provided that no parameters are sent by the host. If the host does send parameters, the RME returns Check Condition indicating an "Illegal Request".

Prevent/Allow Medium Removal

This command typically issued in the MCD mode is also accepted by the RME in the emulation mode. The Prevent/Allow Medium Removal command is used to lock and unlock the drive in the receptacle. A drive cannot be ejected from the receptacle until it is unlocked. If two successive Lock commands are sent to the RME, the drive will be permanently locked in the receptacle. Once permanently locked, the unlock command will have no effect. The drive may be unlocked only by resetting the receptacle through a power-on reset or a cold boot.

Move Medium

This command typically issued in the MCD mode is also accepted by the RME in the emulation mode. The RME returns Good status and Command Complete in response to this command but does nothing more in response to it.

Test Unit Unlocked

This command typically issued in the MCD mode is also accepted by the RME in the emulation mode. This command returns the current lock/unlock status. If the receptacle is unlocked, a Good status code is returned. If either locked or permanently locked, a Check Condition code is returned. In response to a Request Sense command the RME returns the locked/permanently locked status.

Miscellaneous Other Commands

The RME will respond to mandatory commands for DAD devices such as read, write, seek, and format with a Check Condition code. The RME will then send the "Device Not Ready" code when interrogated by the host.

By responding for the drive when its ID is selected, the RME allows the drive to be connected and reconnected without disturbing the system. The RME and drive-receptacle combination thus emulate a removable medium device even though the drives are actually fixed medium devices.

When a drive is inserted into the receptacle, the RME remains in the emulation mode. The RME sets a Check Condition flag for each device ID. The first time each device ID tries to access the drive, the RME will return the Check Condition code. The RME then returns a "Medium May Have Changed" code in response to "Request Sense" commands that will follow. After one device has received the "Medium May Have Changed" code, the RME will unmask the receptacle. The drive then responds for itself. Typically, the drive will return its own Check Condition code (because of power up) the first time it is accessed after being loaded.

The RME enters the emulation mode after a system reset or a SCSI reset. The RME will send the "Reset Occurred" code after after which the RME unmasks the receptacle. The RME may optionally inform the host that the drive is a removable media device in response to an "Inquiry" command by the host.

Although in the system described herein only the mandatory DAD commands are handled, the present invention can be advantageously extended to devices other than a DAD devices in which case the set of supported commands would differ. It will be appreciated that in other applications an emulator can respond to another set of commands as required by the system. Alternatively, a general purpose emulator can be provided which would respond to all commands or the commands related to several types of devices.

One example is the use of a removable tape drive which can be inserted into a receptacle for back up purposes. Such an application is desireable because a single tape drive unit can be used for backing up the hard drives in many computers. An emulator can be provided for the tape drive unit which is a SCSI sequential access device ("SAD"). In the SAD system the emulator would respond to the SAD mandatory commands.

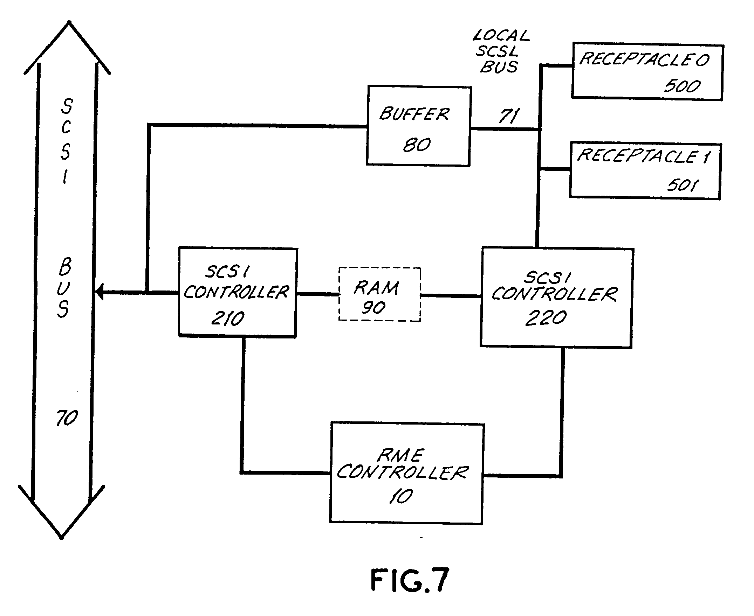

Referring to Fig. 7, an alternate embodiment is shown wherein the drive is isolated from the SCSI bus by the RME. All communications to or from the drives go through the RME. In this system, the RME receives and retransmits the commands intended for each receptacle when it is not masked but intercepts the commands intended for the RME. This approach is currently less desireable because it requires a fast (costly) controller 10 to interpret in real time the SCSI bus communications and it requires two SCSI controllers.

Referring to Fig. 7, the RME plays an active role in all communications with the drives (not shown) in the receptacles, 500 and 501. The RME responds to the Selection phase and receives the first command byte using the SCSI controller 210 connected to the system SCSI bus 70. If the command is for the RME, then the controller 10 will continue with all the bus phases and execute the command in MCD mode. (The MCD mode for this embodiment refers to commands directed to the RME rather than a drive even though the drives and the RME share the same ID.)

If the command is for a drive, then the controller 10 will hold the REQ* signal on the system SCSI bus 70 which stops the command phase. The RME will then arbitrate and select the drive on the local SCSI bus 71 and send the first command byte to the drive using the local SCSI controller 220. The local SCSI controller 220 will hold the ACK signal stopping the command phase on the local SCSI bus 71. Then the controller 10 enables the buffer 80 and releases both REQ* (on the system SCSI bus 70) and ACK* ( on the local SCSI bus 71) to allow the drive and the host to continue communicating. Upon detection of the next Bus Free state the controller 10 disables the buffer 80 again isolating the local bus 71 from the system bus 70.

If the drive reselects, the controller 10 will respond by receiving the identify message, and holding ACK* (which stops the message in phase) on the local SCSI bus 71. The controller then reselects the host on the system SCSI bus 70 holding the REQ* signal after it sends the identify message. The buffer 80 is enabled and REQ* and ACK* are released to allow direct communication between the drive and the host until next Bus Free phase.

At power up or after a reset or drive change, the RME will communicate on the local SCSI bus with the drive to determine, modify, and save all configuration parameters in its local memory. At the host's request, these parameters will be returned by the RME instead of directly from the drive.

Communications between host and drive could also be done indirectly via the RME by disabling the buffer and using direct memory access ("DMA") (not shown) between the two SCSI controllers 210 and 220 using the RAM buffer 90 for data transfers. This allows the RME to intercept or inject its own data as appropriate.

Another alternative concerning the ID circuitry is to preset all drives to a predetermined ID, for example ID no. 3. The jumper select block would not be wired to the drive connector in this case. Rather, the RME circuitry would switch the drive ID line (no. 3) to the respective receptacle ID line (no. 4 or no. 5) during the Arbitration and Selection phases. The drive ID lines and the bus phases are continuously monitored by the ID Mask circuit 40 therefore, that circuit would be modified to include the additional line switching function. The SCSI ID will still be determined by the RME and receptacle in this system however the jumper block does not have to be wired to the connector.

From the foregoing description it will be apparent that improvements in computer apparatus have been provided to allow logical and physical connection and disconnection of one or more devices from an interface bus which does not otherwise provide for such. While a preferred embodiment and other embodiments of the system have been described, it will be appreciated that variations and modifications in the herein described system, within the scope of the invention will be apparent to those skilled in the art. Accordingly, the foregoing description should be taken as illustrative and not in a limiting sense.

**Claims**

1. An emulator to allow a device to be dynamically connected and disconnected from a computer bus (70) comprising:
   a communication controller (20), connected to the bus for communicating over the bus (70);
   an emulator controller (10) connected to the communication controller (20) for receiving commands addressed to the device and responding for the device when the device is not logically connected to the bus;
   the emulator being operative to detect the presence or absence of the device on the bus (70) and responding for the device when the device is logically disconnected from the bus.

2. A removable media emulator for dynamically connecting and disconnecting a fixed media device to a SCSI bus (70) comprising:
   an SCSI controller (20) connected to the SCSI bus (70) for communicating over the bus;
   an emulator controller (10) connected to the SCSI controller (20) for receiving commands addressed to the device and responding for the fixed media device when it is not logically connected to the SCSI bus;
   the emulator being operative to detect the presence or absence of and responding to communications directed to the fixed media device on the bus (70) while it is logically disconnected from the bus.

3. The emulator of claim 2 further comprising:

a fixed disk drive (60) adapted for installation and removal from the SCSI bus (70) during normal system operations;

a receptacle (50) for receiving the fixed disk drive (60) and for supplying electrical connections from the SCSI bus (70) to the drive.

4. The system of claim 3 further comprising:

an SCSI ID masking circuit (40) connected between the fixed disk drive (60) and the SCSI bus (70) for allowing and blocking signal propagation on one or more SCSI data lines between the SCSI bus and fixed disk drive;

the one or more SCSI data lines corresponding to the SCSI device ID for the disk drive (60) when installed in the receptacle (50);

the SCSI ID masking circuit (40) being further connected to the emulator controller (10) for receiving a mask command (MASKIM);

the SCSI ID masking circuit (40) being further operative in response to the mask command (MASKIM) to block signal propagation to the fixed disk drive (60) on the respective SCSI data line.

5. The system of claim 4 further comprising:

a last message sent circuit (30) having an input connected to the SCSI bus (70) and operative to monitor one or more codes sent by the fixed disk drive (60) to the bus;

the last message sent circuit (30) being operative in response to the codes to detect a drive idle condition in which the fixed disk drive (60) is not currently working on any commands;

the system being further operative upon detection of the drive idle condition to selectively mask the fixed disk drive (60) from the SCSI bus (70).

6. An SCSI device for removable use in a SCSI system comprising:

an ID selection circuit (108) for selecting one or more of a plurality of SCSI ID's;

a connector for electrical connection to a system receptacle (50);

the ID selection circuit (108) being electrically connected to the connector for selection of the one or more ID's by a circuit external to the SCSI device.

7. The SCSI device of claim 6 further comprising:

an ID jumper selection block (108) for selection of the one or more ID's using electrical jumpers;

the ID jumper selection block (108) being electrically connected to the connector.

8. A computer system comprising:

a central processing unit for performing general purpose computations;

semiconductor memory circuits for storing instructions and data operatively connected to the central processing unit;

an I/O bus operatively connected to the central processing unit through a communication host for communicating to one or more peripheral devices;

a removable media emulator ("RME") for dynamically connecting and disconnecting a fixed media peripheral device to the I/O bus including,

an RME communication circuit connected to the I/O bus for communicating over the bus; an RME control circuit connected to the RME communication circuit for receiving commands addressed to and responding for the fixed media peripheral device when it is not logically connected to the I/O bus;

the RME being operative to detect the presence or absence of and responding to communications directed to the fixed media peripheral device on the I/O bus while it is logically disconnected from the I/O bus such that the RME and fixed media peripheral device emulate a removable media emulator device.

FIG.I

FIG.2

FIG.3

SCSI BUS 70

EP 0 516 993 A1

FIG. 4

FIG.5

DRIVE = INITIATOR SELECTING

## FIG.6A

EP 0 516 993 A1

**FIG.6B**

DRIVE = TARGET SELECTED
OR = NOT ACTIVE

BSY *

SEL *

I/O *

D4 *

DIR4

FF412

FF415

BUS FREE | ARBITRATION | SELECTION | INFORMATION TRANSFER TO TARGET | INFORMATION TRANSFER TO INITIATOR | BUS FREE

DON'T CARE

DON'T CARE

**FIG.6C**

BUS FREE | ARBITRATION | RESELECTION | INFORMATION TRANSFER TO TARGET | INFORMATION TRANSFER TO INITIATOR | BUS FREE

BSY *

SEL *

I/O *

D4 *  DON'T CARE  DON'T CARE

DIR 4

FF 412

FF 415

DRIVE = INITIATOR RESELECTED OR NOT ACTIVE

## FIG.6D

EP 0 516 993 A1

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IBM TECHNICAL DISCLOSURE BULLETIN. vol. 33, no. 12, May 1991, NEW YORK US pages 289 - 292 'INITIALIZATION AND TEST SUPPORT USING EITHER AN INTERNAL OR AN EXTERNAL DISKETTE DRIVE' * page 291, line 1 - line 29 * | 1,2,8 | G06F3/06 G06F13/40 |
| A | EP-A-0 345 584 (BULL HN INFORMATION SYSTEMS ITALIA) * page 2, column 2, line 2 - line 19 * * column 2, line 52 - column 5, line 19 * * column 10, line 4 - line 11; figures 1-3 * | 1,2,6,8 | |
| A | EP-A-0 403 207 (IBM) * column 3, line 1 - line 42; figures 1,3 * | 1,2,8 | |
| A | ELECTRONIC DESIGN vol. 36, no. 12, 26 May 1988, HASBROUCK HEIGHTS, NEW JERSEY US pages 73 - 77 PHILLIPS 'INTEGRATED SCSI CONTROLLER CHIP HASTENS DISK DATA TRANSFER' * the whole document * | 1,2,8 | TECHNICAL FIELDS SEARCHED (Int. Cl.5 )  G06F |
| A | PATENT ABSTRACTS OF JAPAN vol. 15, no. 16 (P-1152)14 January 1991 & JP-A-22 60 053 ( HITACHI ) 22 October 1990 * abstract * | 6 | |

The present search report has been drawn up for all claims

| Place of search | Date of completion of the search | Examiner |
|---|---|---|
| THE HAGUE | 29 SEPTEMBER 1992 | MOENS R.A. |

EPO FORM 1503 03.82 (P0401)